# EUROPEAN PATENT APPLICATION

(11) **EP 4 733 227 A1**
(43) Date of publication of application: **29.04.2026**
(21) Application number: 24748976.8
(22) Date of filing: 10.06.2024
(51) Int. Cl.: B65G 1/137

(54) **ORDER PREPARATION STATION WITH A COLLABORATIVE ROBOT**

(30) Priority: 21.06.2023 ES 202331103 U
(71) Applicant: Mecalux S.A, 08940 Cornella de Llobregat Barcelona (ES)
(72) Inventor: LEMA ROMAR, Manuel, 08940 Cornellá de Llobregat (BARCELONA) (ES)
(74) Representative: Isern Patentes y Marcas S.L.
(86) International application number: PCT/ES2024/070366
(87) International publication number: WO 2024/261359

(57) **Abstract**

The station is for collecting products from a product bin (4) to an order bin (6) in a work area, and it further comprises: a main line (2) to convey the bin (4); a presentation line (3) to receive the bin (4) and for a collaborative robot (5) to remove units from the bin (4); an order management system to indicate the units to be removed; cameras to obtain information about the products from the product bin (4); a control system of the collaborative robot (5) by processing images from the cameras; an order station (1) that can be supplied with order bins (6), and arranged in the work area; an input conveyor, connected to a global conveying system, to receive the bins (6) from the global conveying system; and a sequencing cart to transfer and distribute the bins (6) from the input conveyor to the order station (7). The station provides improvements in ergonomics, efficiency and productivity.

## Description

### OBJECT OF THE INVENTION

The object of the present application is the registration of an order preparation station in which orders are prepared automatically by a collaborative robot from product units that move in product bins conveyed by at least one main conveying line that runs through all or part of a storage facility to the work station in question, in which product units from the product bin are suitably distributed into different order bins according to an order that usually consists of different items.

### BACKGROUND OF THE INVENTION

Order preparation stations, also known as picking stations, are widely used in large facilities for the storage and distribution of products according to orders, in which an increasing number of alternative or different configurations are required in order to improve efficiency in order preparation, as well as in the ergonomics of the operator who is in charge of preparing the order.

In these facilities, bins containing product units of items or objects to be prepared as an order are conveyed to the order preparation station, collection station, and there they are removed by an operator, in charge of preparing the orders, from the product bins and deposited in order bins according to the order in question. The collection stations are connected by means of a conveying device to a storage area for the product bins and these bins are automatically conveyed to the collection stations.

In an insertion line of the order station, one or more product bins with the products to be prepared for the order are made available to a picking operator, hereinafter operator, at a distance and ergonomically advantageous position, such that the operator can comfortably remove the products from the product bin and the different order bins are made available to the operator to orderly place, according to an order, the products removed from the product bins.

Regarding the arrangement of the order bins within the picking station, different configurations have been tested to, firstly, improve the ergonomics of the operator within his work area and, secondly, move the product and order bins more efficiently both at the entrance to the order station and when they are removed from it, once the items have been arranged according to the order.

Document no. EP2542486 is known and discloses an automated order workstation for manually collecting items from storage bins into order bins according to a collection order that may comprise a plurality of different items. The order bins comprise fast-moving storage bins for fast-moving items and slow-moving storage bins for slow-moving items, which are delivered to the collection workstation along with the order bin. The picking workstation comprises a plurality of storage bin passage channels that can be operated unidirectionally and at least one order bin provision channel that can be operated bidirectionally. Each of the passage channels is allocated one or more fast-moving storage bins or slow-moving storage bins, where each of the included channels has an end that defines a delivery location, where the delivery locations are arranged one next to another and in delivery planes, which are arranged one above another, so that the delivery locations define a picking area where a picking operator can access each storage bin in order to remove an item to be collected and can deposit removed items into the at least one order bin, where the bin passage channels are arranged substantially parallel to each other.

Another alternative configuration is reflected in document no. WO2010135756 which discloses an order preparation device comprising an order preparation storage station arranged at one end of a bin supply device for product carriers and comprising a bin handling device, which is provided at one end of the bin supply device opposite the order preparation storage station.

As mentioned previously, despite the disclosure in the state of the art of different configurations in picking stations for the ergonomic and efficient arrangement of order bins in the order preparation area, there is still a need for alternative solutions in collection stations to further increase the operator's ergonomics, as well as efficiency in the arrangement of orders, improving the circulation of order bins, which leads to an increase in the productivity of the order preparation process.

These alternative solutions may involve the incorporation of additional elements in the order station, which make the entire facility more complex and therefore may also involve greater maintenance.

On the other hand, the order stations configured to prepare several orders simultaneously, having several product bins and order bins simultaneously, require a higher level of operator attention, as well as the incorporation of control means to avoid errors in order preparation, thus requiring more additional elements to reduce the risk of errors on the line.

Another known alternative to have collection stations with high productivity and reduced errors are those exempt from human intervention, through the use of automatic systems managed by robotic arms. However, these automatic systems require complex identification systems for identifying the products to be handled, as well as the movements between the origin and destination bins.

### DESCRIPTION OF THE INVENTION

To provide a more efficient solution with regards to ergonomics for the operator and the passage of the different bins to those provided in the state of the art, the object of the present invention is an order preparation station operated by a collaborative robot or Cobot, which can operate together with operators in a safe way, and which is located in a handling station, with a work area enabled so that the collaborative robot with the articulated arm structure provided with a gripping tool at its end can collect items from at least one product bin to selectively deposit them into one or more order bins.

Therefore, an object of the present invention is to provide an order preparation station with a collaborative robot, provided for the automated collection of items from at least one product bin to at least one order bin, preferably at least four order bins, by a collaborative robot in charge of preparing the orders within a work area, which further comprises:
- A main line provided for conveying the product bin, wherein the product bin is provided with a plurality of the same or different product units;
- a presentation line provided for receiving the product bin, wherein, from said presentation line, a collaborative robot can remove the required product units from said product bin;
- an order management system configured to indicate to the collaborative robot the product units to be removed from the product bin to be deposited into the order bin,
- visual detection means configured to obtain information from the products within the product bin, at some point during the withdrawal of the product and from the inside of the order bins;
- A control system of the collaborative robot using image processing software that analyses the data provided by the cameras, more specifically data on the contour of the products and their volume, and transmits instructions to the collaborative robot to perform the different actions in a precise manner;
- An order station that can be supplied with at least one order bin in which the collaborative robot selectively deposits the product units withdrawn from the product bin (4), where the order station is arranged in the work area of the collaborative robot adjacent to the presentation line;
- An input conveyor connected to a global conveying system of the facility, prepared to receive the order bins coming from said global conveying system of the facility; and
- a sequencing cart configured to transfer and distribute the order bins one by one from the input conveyor to the order station;

Preferably, the order preparation station of the invention comprises an order station, supplied with at least four order bins. The order station is divided into two groups of bins, which are separated by a distance such that the work area of the robot is located between said groups of order bins. Therefore, the robot will have any of the order bins of the order station within reach of the gripping tool. In this way, at least four order bins are within reach of the collaborative robot. This makes the order preparation station very efficient since the movements that the robot must make to prepare the orders are minimal and, consequently, increased efficiency and productivity in the management of orders is achieved.

Given these features, the collaborative robot can collect and unload unknown products at their destination, in other words, products for which it does not receive prior information. This is achieved by processing the information provided by the camera, which, through image recognition software, identifies the contour of the products and provides precise instructions to the robot on how to handle the products.

The collaborative robot can selectively remove or pick the product units from said product bin, this selection of product units being carried out through an order management system which is configured to indicate to the robot the product units to be removed from the product bin and that must be deposited in the order bin(s).

Another advantage of using a collaborative robot is that it is considered a secure device, meaning that it does not require any fencing. This aspect also allows for a more efficient design and use of the order preparation area, as well as better integration of the order preparation station with the rest of the elements that make up an automatic storage area.

According to another aspect of the invention, a plurality of cameras are provided at different points of the order preparation station and they provide information about the products placed into the product bins, the products while they are handled by the collaborative robot, and the contents of the order bins. This information will be transmitted to the collaborative robot controller and, combined with the instructions from the management software, it is transformed into instructions that are transmitted to the collaborative robot.

The order station described above is designed to carry out an order preparation process, in which the collaborative robot relies on different elements coordinated by a specific order management system, which includes the following steps:
- Management software linked to the collaborative arm informs the order preparation station of the contents of the product bin to be presented on the bin presentation line and indicates the tool needed to handle the items in the bin. If necessary, the collaborative robot proceeds to exchange the gripping tool in a docking station that is enabled at the order preparation station.
- Through the use of image recognition devices, the control system of the order preparation station transmits specific instructions to the collaborative robot to take a specific item from the product bin, in a specific gripping position and orientation.
- Following the instructions of the management system, the collaborative robot directs the product taken from the product bin to the allocated order bin, to proceed with the subsequent introduction and release of the item within the order bin, in a specific gripping position and orientation.
- Once the product is deposited in the specific location and position within the order bin, the completion of the task is confirmed, and the order bin is removed from the picking station by a conveying system. Alternatively, for the preparation of an order and, therefore, its completion, it may be necessary to use references of different products arranged in different product bins. In that case, the order bin remains in the same location waiting to receive the rest of the products.
- Once the previous step has been completed, the management software provides new instructions for the collaborative robot to withdraw a new product from either the same product bin or from a new product bin, the camera located above said bin being activated again, updating the reading of its content.

The order preparation station described represents an innovative structure with structural and constituent features heretofore unknown for its intended purpose, reasons which, taken together with its usefulness, provide it with sufficient grounds for obtaining the requested exclusivity privilege.

Other features and advantages of the order preparation station object of the present invention will become apparent from the description of a preferred but not exclusive embodiment illustrated by way of non-limiting example in the attached drawings, in which:

### BRIEF DESCRIPTION OF THE DRAWINGS

Figure 1 is a perspective view of an order preparation station with a collaborative robot according to the present invention;
Figure 2 is a plan view of the order preparation station according to the invention; and
Figure 3 is an elevation view of the order preparation station according to the invention;
Figure 4 is an additional perspective view of the order preparation station according to the invention;

### DESCRIPTION OF A PREFERRED EMBODIMENT

In view of the aforementioned figures, and in accordance with the adopted numbering, one may observe therein a preferred exemplary embodiment of the invention, which comprises the parts and elements indicated and described in detail below.

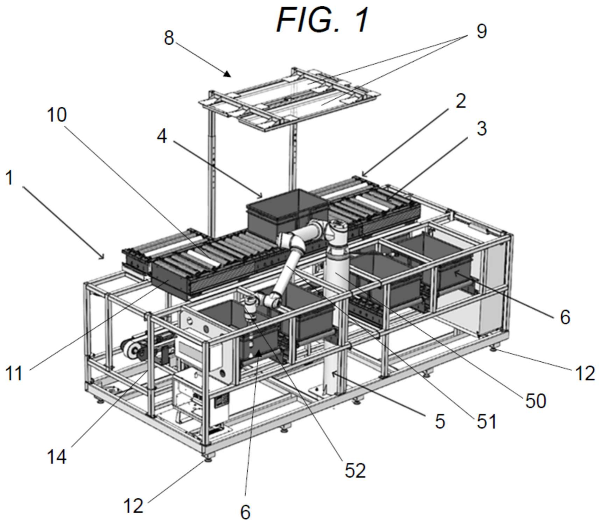

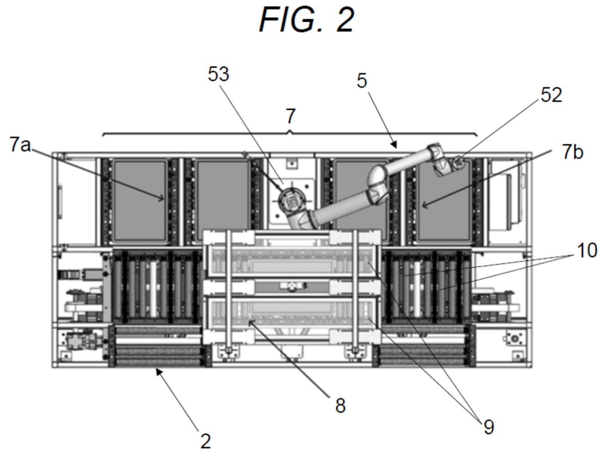

As shown in figures 1 and 2 that accompany the detailed description, the present invention comprises an order preparation station (1) to automatically collect items from at least one product bin (4) to at least one order bin (6), by means of a collaborative robot (5) in charge of preparing the orders, which is fixed on a base (53) anchored to the floor by conventional fixing means.

The order preparation station (1) comprises a main line (2), along which the product bins (4) containing the product references required for the preparation of the different orders circulate. These product bins (4) are transferred by bin withdrawal means (not shown) from the main line (2) to a presentation line (3) from which the collaborative robot (5) will be able to remove the required product units.

As shown, the presentation line (3) comprises a plurality of rollers (10) on which the product bins (4) mounted on a bench (11) slide.

The order preparation station (1) includes a lighting support (8) made up of a plurality of profiles that support lighting means (9) that are oriented in such a way that they illuminate a section of the presentation line (3) where the product bin (4) stops. It should be noted that the height of the lighting means (9) can be adjusted in height by means of a height adjustment system, so that the distance in height of the lighting means can vary with respect to the horizontal plane of the presentation line (3).

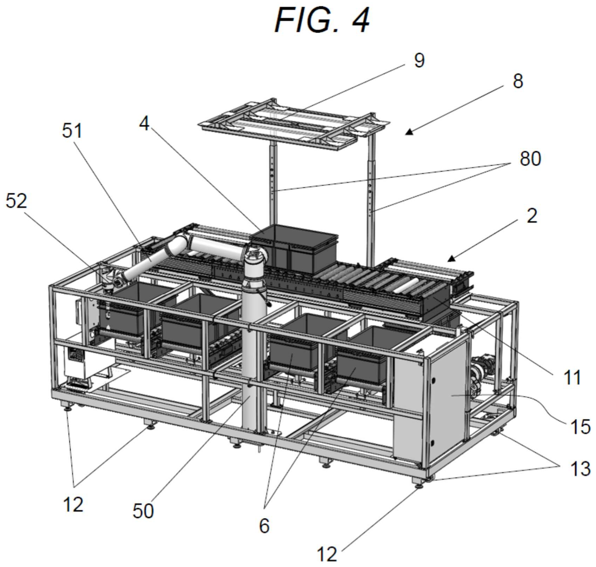

As shown in figures 1 and 4, the aforementioned height adjustment system is formed by vertical telescopic profiles (80) and holding pins, which are part of the lighting support (8).

Returning to the collaborative robot (5), it has a main structure (50) in the form of a column that protrudes vertically from the base (53), and at the opposite end, it has an articulated robotic arm (51) for linear actuators with three XYZ axes.

Furthermore, the number of units that the collaborative robot (5) must remove will be indicated by an order management system, for example, EasyWMS^{®}, via a software program for controlling the collaborative robot (5).

Through the use of image recognition devices (not shown), the control system of the order preparation station transmits instructions to the collaborative robot (5), such as instructions about the type of tool to use for picking the products, as well as the collection order of each product, and the holding method. Holding method is understood as the exact position and gripping angle of the product.

Using instructions provided by the order management system, for example, EasyWMS^{®}, the collaborative robot (5) directs the holding tool (52), located at the end of the robotic arm (51) that holds the product, to the predetermined order bin (6), among the four bins of the order station (7) that are arranged on both sides of the main structure (50) of the collaborative robot (5), forming two groups of order bins (7a) and (7b), where said first and second groups of order bins (7a) and (7b) can each be supplied with two order bins (6) in which the robot selectively deposits the product units withdrawn from the product bin(s) (4).

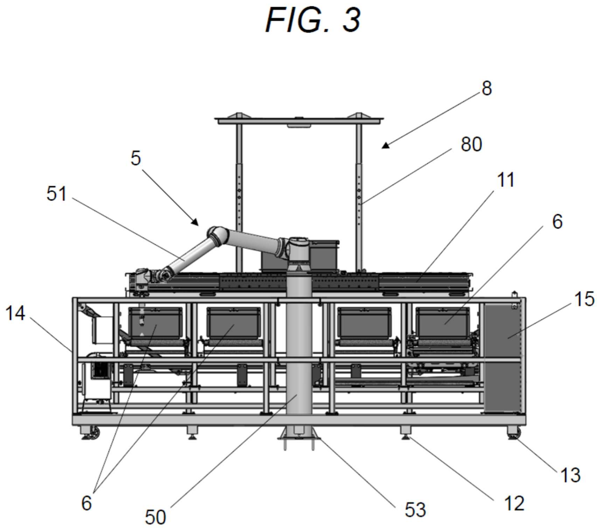

As shown in figures 1 to 4, the arrangement of the bins in the order station (7) is at a suitable distance within the work area and within reach of the robotic arm (51), which will have any order bin (6) of the order station (7) within reach of the holding tool (52). Thus, the four order bins (6) are within reach of the robotic arm (51) of the collaborative robot (5).

Additionally, the frame (14) in the order preparation station (1) includes a plurality of support feet (12) to keep the frame in the same horizontal plane (regardless of the existence of irregularities on the floor) and wheels (13) arranged at the bottom that make it easier to move the station to its final location. As shown, the frame (14) that supports an electrical panel (15) at one of its ends comprises a profile that allows different parts or systems that are part of the order preparation station (1) to be placed in the most appropriate position.

Once the correct unloading of the item into the order bin is completed and verified, and if the order has been finalised with this action, the order bin(s) (6) is/are removed from the order station (7) by the sequencing cart, which is in charge of transferring said order bin (6) to an output conveyor, in turn connected to the conveying system of the facility.

Otherwise, if the order bin (6) must receive new items to complete the order, the preparation process is repeated with the corresponding products that come from new product bins (4) in the order preparation station (1).

During the operation of the order facility, it is possible for the collaborative robot to work in collaboration with humans (operators). In the event that a person enters the area that is predefined for safety reasons, the robot will automatically go into "reduced" mode, in other words, it operates at a lower speed compared to its "normal mode" operation, or it even stops.

It should be noted that it will be apparent to those skilled in the art that the present teachings can be implemented without such details.

### Reference numbers:

- 1.: Order preparation station
- 2.: Main line
- 3.: Presentation line
- 4.: Product bin
- 5.: Collaborative robot
- 50.: main structure
- 51.: robotic arm
- 52.: holding tool
- 53.: base
- 6.: Order bins
- 7.: Order station
- 7a.: First group of order bins
- 7b.: Second group of order bins
- 8.: Lighting support
- 80.: vertical telescopic profiles
- 9.: Lighting means
- 10.: Rollers
- 11.: Bench
- 12.: Support feet
- 13.: Wheels
- 14.: Frame

## Claims

1. An order preparation station with a collaborative robot, provided for the automated collection of items from at least one product bin (4) to at least one order bin (6) by a collaborative robot (5) in charge of preparing the orders within a work area, which further comprises:
- A main line (2) provided for conveying the product bin (4), wherein the product bin (4) is provided with a plurality of the same or different product units;
- a presentation line (3) provided for receiving the product bin (4), wherein, from said presentation line (3), a collaborative robot (5) can remove the required product units from said product bin (4);
- an order management system configured to indicate to the collaborative robot (5) the product units to be removed from the product bin (4) to be deposited into the order bin (6);
- visual detection means configured to obtain information from the products within the product bin;
- A control system of the collaborative robot (5) using image processing software that analyses the data provided by the cameras;
- An order station (1) that can be supplied with at least one order bin (6) in which the collaborative robot (5) selectively deposits the product units withdrawn from the product bin (4), where the order station (7) is arranged in the work area of the collaborative robot adjacent to the presentation line (3);
- An input conveyor connected to a global conveying system of the facility, prepared to receive the order bins (6) coming from said global conveying system of the facility; and
- a sequencing cart configured to transfer and distribute the order bins (6) one by one from the input conveyor to the order station (7).

2. The order preparation station according to claim 1, **characterised in that** the visual detection means comprise a plurality of cameras.

3. The order preparation station according to any of the preceding claims, **characterised in that** the presentation line (2) includes lighting means (9) oriented in such a way that they illuminate a section of the presentation line (3) where the product bin (4) stops.

4. The order preparation station according to claim 1, **characterised in that** the lighting means (9) are supported on a height-adjustable lighting support (8), such that the distance in height of the lighting means is variable with respect to the horizontal plane of the presentation line (3).

5. The order preparation station according to any of the preceding claims, **characterised in that** it is divided into two groups of bins, which are separated by a distance such that the work area of the collaborative robot (5) is located between said groups of order bins.
